Europäisches Patentamt

European Patent Office

Office européen des brevets

(11) Publication number: **0 128 884**
**B1**

## EUROPEAN PATENT SPECIFICATION

(45) Date of publication of patent specification: **28.06.89**

(51) Int. Cl.⁴: **B 23 Q 1/08**

(21) Application number: **84850122.7**

(22) Date of filing: **12.04.84**

(54) Power transmission device.

(30) Priority: **12.04.83 SE 8302032**

(43) Date of publication of application:
**19.12.84 Bulletin 84/51**

(45) Publication of the grant of the patent:
**28.06.89 Bulletin 89/26**

(84) Designated Contracting States:
**CH DE FR GB IT LI**

(56) References cited:
**DE-C- 701 306**
**FR-A- 870 501**
**GB-A- 781 954**

**METALWORKING PRODUCTION, vol. 106, no. 18, 2nd May 1962, pages 54-56, London, GB; J. SELBY: "The case for the turret mill"**

(73) Proprietor: **AB ERIK BOHLIN**
**Gardsvägen 2**
**S-171 52 Solna (SE)**

(72) Inventor: **Wedlin, Per**
**Helsingörsgatan 22**
**S-163 42 Spanga (SE)**

(74) Representative: **Nordén, Ake et al**
**AWAPATENT AB Box 7402**
**S-103 91 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a power transmission device for use in drilling machines, in which a rotational movement is transmitted from a preferably motor-driven, axially non-displaceable element rotatably mounted in a frame to an axially displaceable element by the intermediary of mutually engaging means provided on each of said two elements and respectively having complementary external and internal grooves and ridges, the axially displaceable element being substantially sleeve-shaped and having an opening which extends in the axial direction and is provided with internal grooves and ridges, said opening being adapted to receive a projection of the axially nondisplaceable element being shaft-shaped and itself provided with external grooves and ridges, said internal and external grooves and ridges remaining in engagement at any axial displacement of the elements and thus transmitting the rotational movement between said elements and said axially displaceable element being radially non-displaceably and rotatably retained in an axially displaceable quill by means of at least two bearings.

In a vast number of applications, use is made of power transmitting devices in which a rotational movement should be transmitted between two axially displaceable elements. To that end use is normally made of so-called splines, i.e. internal grooves and ridges provided at a sleeve-shaped portion of one element and external grooves and ridges provided at a projection on the other element insertible in said sleeve-shaped portion. In prior art power transmission devices, the sleeve-shaped element is generally provided with quite short grooves and ridges, while at the other element cooperating with said first element the grooves and ridges extend throughout the entire length of the element and at any rate as far as required by the intended stroke or axial movement.

In order that a power transmission device of the above type should operate satisfactorily over long periods, it is necessary that the two elements be accurately mounted so as to maintain the linearity also during relative axial displacement. This calls for at least two bearings for each element, which means that the overall length beyond the portions participating in the axial displacement becomes substantial and also that the axially displaceable element is guided in such a manner that no bending occurs.

DE-C-701 306 discloses a power transmission device where an elongated axially non-displacement element provided with external grooves and ridges along its entire length is received in an axially displaceable element provided with internal grooves and ridges and carried by guides allowing certain radial displacement of the displaceable element. The grooves and ridges of the displaceable element are far shorter in length axially than the grooves and ridges of the non-displaceable element and the two elements are both carried by two bearings for ensuring linearity of same.

The object of this invention is to provide a novel power transmission device for the above-indicated purpose, which is so designed that the demands for absolute linearity between the elements during the displacement thereof can be alleviated and which also reduces the overall length of the construction. A further object is to provide a power transmission device which is less expensive than prior art power transmission devices of the type here contemplated.

An essential feature of the power transmission device according to the invention resides in that the external grooves and ridges on the projection of the axially non-displaceable element are located only at an outer end portion thereof which at any axial displacement remains within said axially displaceable element while the remaining part of the projection has a diameter which is smaller than the free diameter inwardly of the internal ridges of the axially displaceable element, and that the axially non-displaceable element is rotatably mounted in the frame by means of a single bearing at the opposite end of said element to said projection and permits angular deviation.

The drilling machine provided with the power transmission device according to the invention comprises a frame 1 which by the intermediary of a pillar or like support means is carried in a per se known manner by a table or the like, and an electric motor 2 is mounted at the frame.

An axially displaceable sleeve-shaped member forming a so-called quill 7 extends through the lower portion of the frame or frame housing which forms a hydraulic cylinder 4.

The sleeve-shaped member or quill 7 at its upper and lower ends carries bearings 11 and 12, respectively, for a drilling spindle 13 which is mounted within the quill in an axially non-displaceable manner in relation thereto and which is axially displaceable together with the quill and rotatable within it. The upper portion 14 of the drilling spindle 13 is hollow and provided with longitudinal grooves and ridges, i.e. internal splines 15 of a length which slightly exceeds the total axial stroke of the quill 7 and the drilling spindle 13.

At the upper portion of the frame, there is provided a bearing 16 in which a drive shaft 17 is mounted. At its upper end, the drive shaft has a belt pulley 18 and, at its lower end extending into the spindle 13, it is provided with external relatively short grooves and ridges or splines 19 adapted, in a power transmitting manner, to engage the internal grooves and ridges 15 of the spindle 13.

The internal splines 15 of the spindle 13 which, independently of the axial position of displacement, engage and are driven by the external splines 19 at the end portion of the shaft 17 confer advantages in respect of both manufacture and operation as compared with current constructions, since the overall height of the construction can be reduced and the demands for linearity between spindle and drive shaft can be kept within reasonable limits as at the same time the need for double bearings for both the spindle and the shaft is eliminated. The inner end of the drive shaft 17 which is provided with splines 19 requires no separate bearing since, independently of the axial position of displacement, it will always be supported by the splines 15 of the spindle 13 which, in turn, is mounted in the quill.

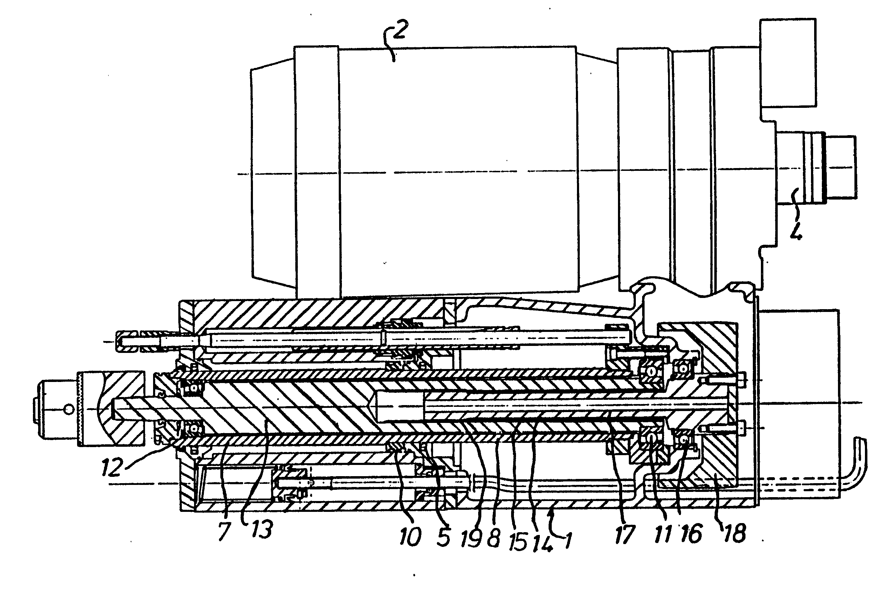

## Claims

1. A power transmission device for use in drilling machines, in which a rotational movement is transmitted from a preferably motor-driven, axially non-displaceable element (17) rotatably mounted in a frame (1) to an axially displaceable element (13) by the intermediary of mutually engaging means provided on each of said two elements and respectively having complementary external and internal grooves and ridges (15, 19), the axially displaceable element being substantially sleeve-shaped and having an opening which extends in the axial direction and is provided with internal grooves and ridges (15), said opening being adapted to receive a projection of the axially non-displaceable element being shaft-shaped and itself provided with external grooves and ridges (19), said internal and external grooves and ridges remaining in engagement at any axial displacement of the elements and thus transmitting the rotational movement between said elements and said axially displaceable element being radially non-displaceably and rotatably retained in an axially displaceable quill (7) by means of at least two bearings (11, 12), characterised in that the external grooves and ridges (19) on the projection of the axially non-displaceable element (17) are located only at an outer end portion thereof which at any axial displacement remains within said axially displaceable element (13) while the remaining part of the projection has a diameter which is smaller than the free diameter inwardly of the internal ridges (15) of the axially displaceable element (13), and that the axially non-displaceable element (17) is rotatably mounted in the frame (1) by means of a single bearing (16) at the opposite end of said element to said projection and permits angular deviation.

2. Power transmission device as claimed in claim 1, characterised in that one of said elements consists of a drilling spindle or the like (13) rotatably mounted in an axially displaceable so-called quill (7) and provided with an axial opening having internal grooves and ridges (15), while the other element consists of a motor-driven shaft (17) axially and radially non-displaceably mounted in a frame and having a projection which extends into the opening of the drilling spindle and whose end portion only has short external grooves and ridges (19), and that said motor-driven shaft (17) is mounted in a single bearing (16) allowing angular deviation.

## Patentansprüche

1. Antriebsvorrichtung zur Verwendung in Bohrmaschinen, bei denen eine Drehbewegung von einem vorzugsweise motorisch angetriebenen, axial nicht verschiebbaren, drehbar in einem Ständer (1) gelagerten Element (17) zu einem axial verschiebbaren Element (13) mit Hilfe von jeweils an den beiden Elementen vorgesehenen, miteinander in Eingriff stehenden Mitteln, die einander entsprechende äussere und innere Nuten und Erhöhungen (15, 19) aufweisen, übertragen wird, wobei das axial verschiebbare Element hauptsächlich hülsenförmig ist und eine Öffnung aufweist, die sich in Axialrichtung erstreckt und mit inneren Nuten und Erhöhungen (15) versehen ist, wobei diese Öffnung vorgesehen ist, um einen stilförmigen, vom axial unverschiebbaren Element vorstehenden Vorsprung aufzunehmen und selbst mit äusseren Nuten und Erhöhungen (19) versehen ist, wobei die besagten inneren und äusseren Nuten und Erhöhungen bei jeder axialen Verschiebung der Elemente in Eingriff miteinander bleiben und auf diese Weise die Drehbewegung zwischen den Elementen übertragen, und wobei das besagte axial verschiebbare Element radial unverschiebbar und drehbar in einer axial verschiebbaren Pinole (7) durch wenigstens zwei Lager (11, 12) gehaltert ist, dadurch gekennzeichnet, dass die äusseren Nuten und Erhöhungen (19) des Vorsprunges des axial nicht verschiebbaren Elementes (17) nur an dem äusseren Endteil desselben vorhanden sind, welches in jeder beliebigen axialen Verschiebungsposition in dem axial verschiebbaren Element (13) verbleibt, während der restliche Teil des Vorsprunges einen Durchmesser aufweist, der geringer ist als der lichte Durchmesser der inneren Erhöhungen (15) des axial verschiebbaren Elementes (13), und dass das axial nicht verschiebbare Element (17) drehbar im Ständer durch ein einfaches Lager (16) am dem Vorsprung abgewandten Ende des besagten Elementes angebracht ist und Winkeländerung gestattet.

2. Antriebsvorrichtung nach Anspruch 1, dadurch gekennzeichnet, dass eines der Elemente aus einer Bohrspindel o.dgl. (13) besteht, die drehbar in einer axial verschiebbaren, sogenannten Pinole (7) vorgesehen und mit einer Axialöffnung versehen ist, die innere Nuten und Erhöhungen (15) aufweist, während das andere Element aus einer motorisch angetriebenen, axial und radial unverschiebbar in einem Ständer vorgesehenen Welle (17) besteht und einen Vorsprung aufweist, der sich in die Öffnung der Bohrspindel streckt und dessen Endteil nur kurze äussere Nuten und Erhöhungen (19) aufweist, sowie dass die motorisch angetriebene Welle (17) in einem einfachen Lager (16) gelagert ist, welches Winkeländerung gestattet.

## Revendications

1. Dispositif de transmission de puissance pour emploi dans des perçeuses, dans lequel un mouvement de rotation est transmis, depuis un élément (17) qui est de préférence entrainé par un moteur, qui ne peut pas se déplacer axialement et qui est monté, avec liberté de rotation, dans un bâti (1), à un élément (13) qui peut se déplacer axialement, par l'intermédiaire de moyens, venant mutuellement en prise, prévus sur chacun des deux dits éléments et présentant respectivement des rainures et des nervures (15, 19) extérieures et intérieures complémentaires, l'élément qui peut se déplacer axialement ayant sensiblement la forme d'un manchon et présentant une ouverture qui s'étend dans la direction axiale et présente des rainures et des nervures (15) intérieures, ladite ouverture étant conçue pour recevoir un prolongement de l'élément, qui ne peut pas se déplacer axialement, en forme d'arbre présentant lui-même des rainures et des nervures (19) extérieures, lesdites rainures et lesdites nervures intérieures et extérieures restant en prise pour tout déplacement axial des éléments et transmettant ainsi le mouvement de rotation entre lesdits éléments, et ledit élément qui peut se déplacer axialement étant monté, sans liberté de déplacement radial et avec liberté de rotation relative, dans un arbre creux (7), qui peut se déplacer axialement, au moyen d'au moins deux roulements (11, 12), caractérisé en ce que les rainures et les nervures extérieures (19) prévues sur le prolongement de l'élément (17) qui ne peut pas se déplacer axialement ne sont situées que sur sa portion d'extrémité extérieure qui, pour tout déplacement axial, reste à l'intérieur dudit élément (30) qui peut se déplacer axialement, tandis que la partie restante du prolongement a un diamètre inférieur au diamètre laissé libre à l'intérieur par les nervures intérieures (15) de l'élément (13) qui peut se déplacer axialement et en ce que l'élément (17) qui ne peut pas se déplacer axialement est monté, avec possibilité de rotation, dans le bâti (1) au moyen d'un unique roulement (17) situé à l'extrémité dudit élément opposée audit prolongement et autorise un écart angulaire.

2. Dispositif de transmission de puissance selon la revendication 1, caractérisé en ce que l'un desdits éléments est constitué d'une broche de perçage ou analogue (13) montée, avec liberté de rotation, dans un arbre creux (7), qui peut se déplacer axialement, est munie d'une ouverture axiale présentant des rainures et des nervures intérieures (15), tandis que l'autre élément est constitué d'un arbre (17), entrainé par un moteur, monté, sans liberté de déplacement axial ni radial, dans un bâti et présentant un prolongement qui s'étend dans l'ouverture de la broche de perçage et dont seule la portion d'extrémité comporte de courtes rainures et nervures extérieures (19); et en ce que ledit arbre (17) entrainé par un moteur est monté dans un unique roulement (16) qui autorise un écart angulaire.